# EUROPEAN PATENT APPLICATION

(11) **EP 1 622 213 A1**
(43) Date of publication of application: **01.02.2006**
(21) Application number: 05254687.6
(22) Date of filing: 27.07.2005
(51) Int. Cl.: H01M 2/02

(54) **Modular battery container**

(30) Priority: 27.07.2004 US 591529 P
(71) Applicant: PACCAR INC., Bellevue, WA 98804 (US)
(72) Inventor: Plummer, Lew, Mount Vernon, WA 98273 (US)
(74) Representative: Tranter, Andrew David

(57) **Abstract**

A selectively expandable vehicle battery container (100 or 200). The selectively expandable vehicle battery container includes a first modular body section (120, 220, and/or 221) at least partially defining a cavity (118) for storing at least a portion of a battery (102 or 202), the cavity having a first open end and a second open end. At least the first open end includes an attachment structure (148, 150, 248, or 250) adapted to couple to a second modular body section (120, 220, and/or 221) shaped substantially identical to the first modular body section such that the cavity can be selectively expanded in volume by coupling the second modular body section to the first modular body section.

## Description

### CROSS-REFERENCE TO RELATED APPLICATION

This application claims the benefit of Provisional Application No. 60/591,529, filed July 27, 2004, and entitled Modular Battery Container, the disclosure of which is hereby expressly incorporated by reference.

### FIELD OF THE INVENTION

The illustrated embodiments of the present invention relate to battery containers, and more specifically to battery containers that are modular in design.

### BACKGROUND OF THE INVENTION

Batteries, chemical by nature, function optimally at temperatures around 29°C. Battery performance is greatly reduced when the temperature drops below optimal temperatures. For example, temperatures around -5°C can reduce the battery's ability to respond to a load by one half. Heating the battery or locating it in a heated area can allow full battery capacity in cold conditions.

In vehicles whose batteries are not located in an engine compartment, packaging the batteries in an insulated and heated battery container provides full battery capacity. Insulating the battery container also allows the battery to remain warm over a prescribed time without an electrical heater load penalty when the engine is not running. When the engine is running, an alternator is charging the batteries and supporting electrical heaters that store heat in the batteries. When the engine is not running, the insulated container impedes the release of the heat stored in the batteries allowing full capacity to be realized during a prescribed time period. That time period is dependent on the battery container design and insulating material efficiency and thickness.

However, to work efficiently, the insulated container must closely match the size of the batteries contained within the box. The larger the empty space in the battery container, the more inefficient the container is at maintaining the batteries contained therein at an optimum temperature. Therefore, to handle the various battery configurations used in vehicles, manufactures and/or part suppliers must design, manufacture, store, and maintain a wide variety of insulated battery containers to accommodate all available battery configurations. Thus, there exists a need for a battery container that can accommodate most, if not all, available battery configurations while decreasing the volume of empty space in the battery container.

### SUMMARY OF THE INVENTION

One embodiment of a selectively expandable vehicle battery container formed in accordance with the present invention is disclosed. The selectively expandable vehicle battery container includes a first modular body section at least partially defining a cavity for storing at least a portion of a battery. The cavity has a first open end and a second open end. At least the first open end includes an attachment structure adapted to couple to a second modular body section shaped substantially identical to the first modular body section such that the cavity can be selectively expanded in volume by coupling the second modular body section to the first modular body section.

An alternate embodiment of a modular vehicle battery container formed in accordance with the present invention is disclosed. The modular vehicle battery container includes a first modular center section and a second modular center section coupled to the first modular center section. The second modular center section is substantially identical to the first modular center section. The modular vehicle battery container includes a first end section attached to the first modular center section and a second end section attached to the second modular center section. The first and second modular center sections and the first and second end sections cooperatively define a cavity for receiving one or more vehicle batteries.

Another embodiment of a modular battery container formed in accordance with the present invention is disclosed. The modular battery container includes one or more modular center body sections having a first end and a second end. The one or more modular center body sections define a cavity for storing a battery. The first and second ends of the one or more modular center body sections are each adapted to be coupled to either an end panel to limit a volume of the cavity or coupled to another one of the one or more modular center body sections to selectively expand the volume of the cavity.

One embodiment of a method of forming a vehicle battery container for housing a selected number of vehicle batteries performed in accordance with the present invention is disclosed. The method includes determining the selected number of vehicle batteries in which the vehicle battery container is to house and selecting a number of modular sections for forming an enclosure of sufficient size to house the selected number of vehicle batteries. The method also includes forming the enclosure by coupling the selected number of modular sections to one another.

### BRIEF DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is an elevation view of a Class Eight truck outfitted with one embodiment of a modular battery container formed in accordance with the present invention and shown with a top panel of the battery container removed;
FIGURE 2 is a top view of the modular battery container of FIGURE 1 with the top panel of the modular battery container still removed to show a control system and four batteries contained therein;
FIGURE 3 is a cross-sectional view of the modular battery container of FIGURE 2, the cross-sectional cut taken substantially through Section 3-3 of FIGURE 2;
FIGURE 4 is a top exploded view of the modular battery container of FIGURES 1-3 shown in a two battery configuration, wherein a top panel has been removed to better show the two batteries contained therein;
FIGURE 5 is a cross-sectional view of the modular battery container of FIGURE 4, the cross-sectional cut taken through Section 5-5 of FIGURE 4;
FIGURE 6 is a right side exploded elevation view of the modular battery container of FIGURE 4, wherein a right side of the modular battery container has been removed to show one of the two batteries contained therein and the top panel is now shown;
FIGURE 7 is an exploded, cross-sectional front elevation view of the modular battery container of FIGURES 1-3 shown in a single battery configuration, the cross-sectional cut taken vertically just in front of the battery along Section 3-3 of FIGURE 2;
FIGURE 8 is a right side exploded elevation view of an alternate embodiment of a modular battery container formed in accordance with the present invention with a right side panel and a left side panel removed for clarity; and
FIGURE 9 is a front exploded elevation view of the modular battery container of FIGURE 8 with the right and left side panels now shown and depicted spaced outward from the main body of the modular battery container.

### DETAILED DESCRIPTION OF THE PREFERRED EMBODIMENT

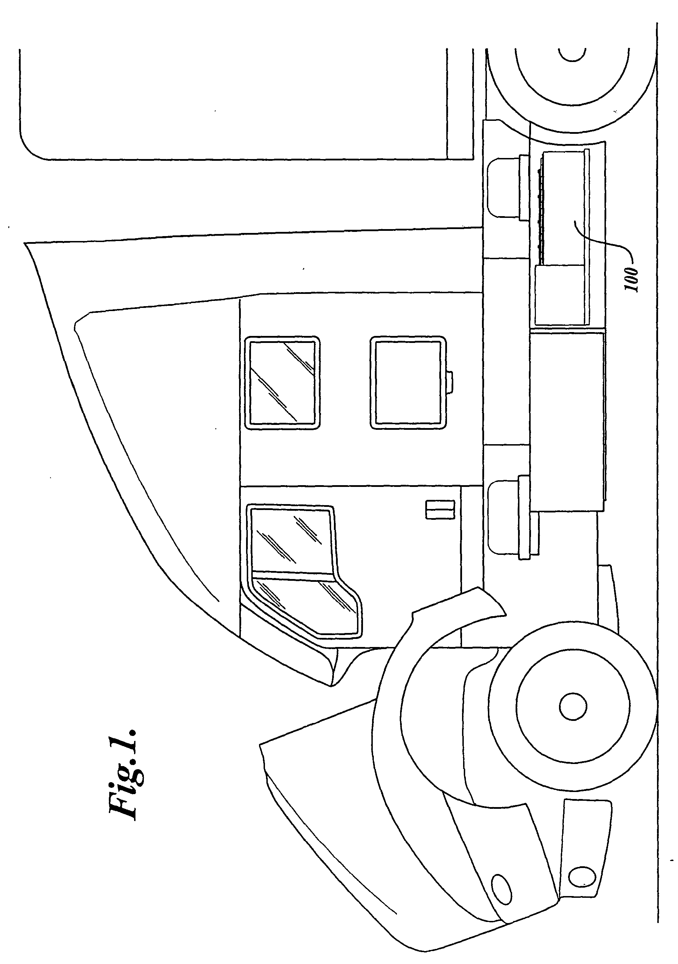

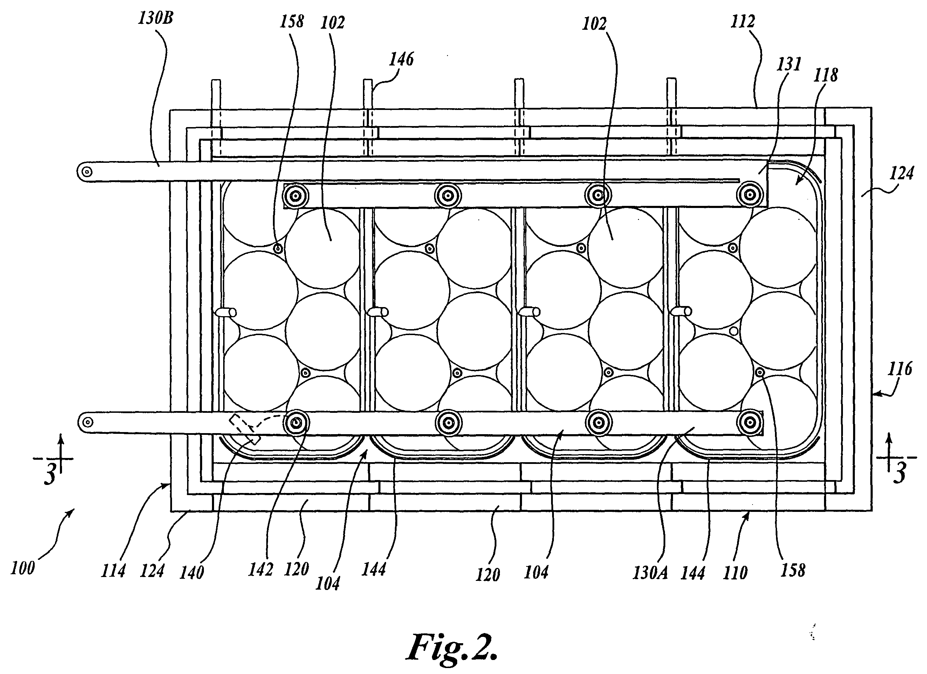

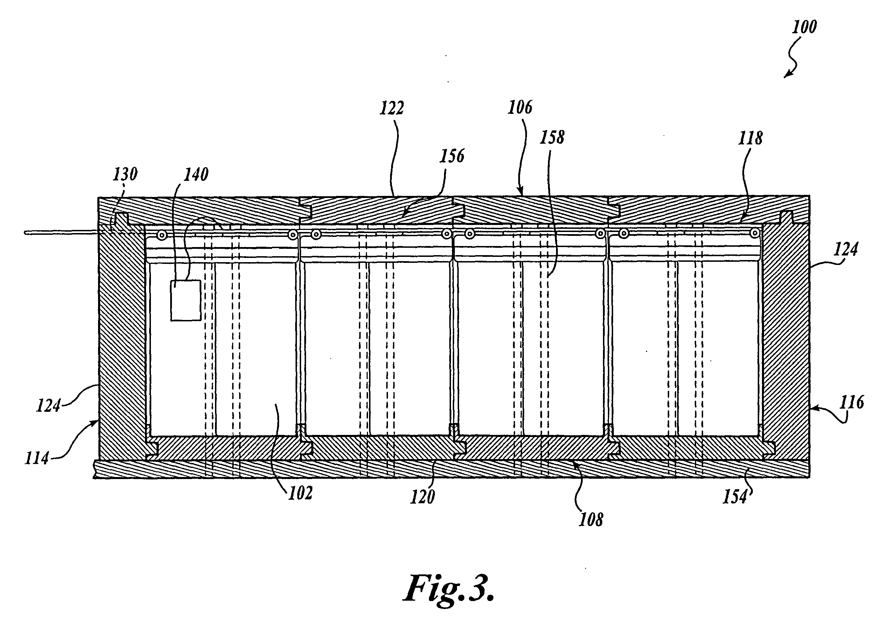

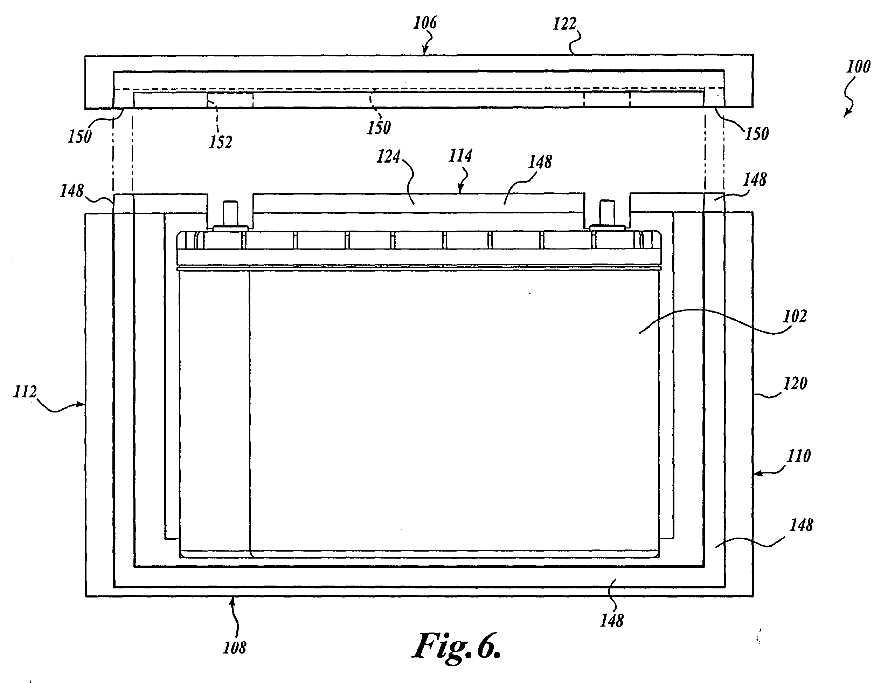

One embodiment of a modular, expandable, heated battery container 100 formed in accordance with the present invention is depicted in FIGURES 1-7. Referring now to FIGURES 2 and 3, the battery container 100 is modular in design so that the battery container 100 can be easily and efficiently expanded or reduced in size to accommodate virtually any number of batteries 102. The modular battery container 100 may include a heating system 104 for heating the batteries 102 to aid in maintaining the batteries 102 above an optimum working temperature, for instance above 29°C. The modular battery container 100 may also be insulated to retain heat within the modular battery container 100 to aid in maintaining the batteries above or near an optimum working temperature after the battery heating system 104 is shut down and to reduce the load of the battery heating system 104 while the battery heating system is in operation by reducing a rate of heat transfer out of the modular battery container 100.

The modular battery container 100 may also be used to reduce the volume of space occupied by the battery container and optimize thermal efficiency relative to previously developed designs. More specifically, installing two batteries in an insulated box designed for four batteries leaves a large unoccupied air space leading to heating inefficiency and wasted space in the vehicle. With the modular design of the illustrated embodiment, the modular battery container 100 may be adjusted in size to more exactly contain the batteries, thereby eliminating large unheated air spaces, resulting in a reduction in the amount of energy required to heat the modular battery container 100, and saving space in the vehicle. -

Focusing in more detail upon the components of the modular battery container 100, the modular battery container 100 includes a top panel 106, a bottom panel 108, a front side panel 110, a back side panel 112, a left side panel 114 (also may be called an end section or end plate), and a right side panel 116 (also may be called an end section or end plate). Preferably, the panels 106-116 are formed from any suitable rigid, semi-rigid, and/or deformable material, one example being an insulative, nonconductive material, such as Expanded Poly Propylene (EPP). The deformable material may have an outer skin, one suitable example being vinyl, applied to the material to provide an esthetically pleasing and/or wear resistant outer surface. These panels 106-116 form an enclosure 118 for housing one or more batteries 102, with four batteries 102 shown in FIGURES 1-3. The bottom, front, and back side panels 108, 110, and 112 of the illustrated enclosure 118 may be formed from a plurality of U-shaped joinable section pieces 120 (also may be called channel sections or center body sections) such that the length of the enclosure 118 may be selectively adjusted by adding or subtracting section pieces 120 to/from the modular battery container 100. This allows separate joinable section pieces 120 to be added (or removed) as batteries 102 are added (or eliminated) from the modular battery container 100 or during initial installation to match the number of batteries that will be used by the vehicle. Although the illustrated embodiment is shown and described as being expandable in length to accommodate additional batteries in line with one another, it should be apparent to those skilled in the art that the modular battery container 100 may also be expanded in width to permit another battery to be added in a side-by-side arrangement.

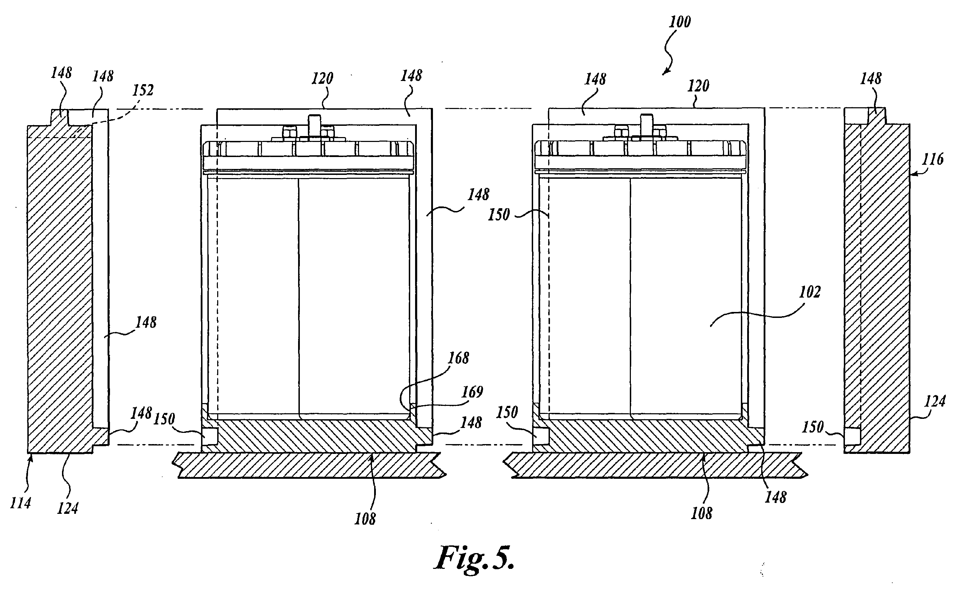

As best shown in FIGURE 5, the bottom panel 108 may include a battery interlocking structure 168 for interlocking the battery 102 to the bottom panel 108. Moreover, the battery interlocking structure 168 is sized and shaped to selectively key to a corresponding shaped interlocking structure 169 on the battery 102 to aid in holding the battery 102 in a selected position in the battery container 100. In the illustrated embodiment, the battery interlocking structure 168 is in the form of a recess, the recess sized and shaped to closely match a bottom profile of the battery 102 to cooperatively receive the battery 102 within the recess. The interaction of the interlocking structure 168 with the battery 102 may aid in restraining the battery 102 in a predetermined position within the battery container 100, especially during acceleration and braking events. Further, the interlocking structure 168, since it is cooperatively shaped to receive the battery 102, may be shaped, sized, and/or located such that only a specific battery type, make, size, etc., can be used with the battery container 100, or such that the battery 102 can only be located in a predetermined position within the battery container 100. Although the interlocking structure 168 of the illustrated embodiment is depicted and described as being a recess sized and shaped to at least partially receive the battery 102, it should be apparent to those skilled in the art that the interlocking structure 168 may be alternately formed without departing from the spirit and scope of the present invention. For instance, the interlocking structure 168 may be a protruding structure that is received in a corresponding shaped recess in the battery 102.

The top panel 106 may be formed from a plurality of joinable section plates 122, each joinable section plate 122 having substantially the same length as the U-shaped joinable section pieces 120. The joinable section plates 122 are selectively joinable to an adjacent section plate 122 such that the length of the top panel 106 may be adjusted in length to match any adjustment in length made to the enclosure 118 when the U-shaped joinable section pieces 120 are added or removed from the modular battery container 100. Alternately, the top panel 106 may be a single unitary piece, or made of any number of sections.

The left and right side panels 114 and 116 are formed from joinable end plates 124. The joinable end plates 124 may be configured to interface or lock to the U-shaped joinable section pieces 120 and plates 122, thereby acting as end caps, closing off the enclosure 118. More specifically, the joinable end plates 124 couple to the top, bottom, front, and back side panels 106, 108, 110, and 112 of the enclosure 118. Thus, by joining a selected number of U-shaped joinable section pieces 120 to form a U-shaped trough, and capping the U-shaped trough with the same number of joinable section plates 122, and capping the ends of the resultant tubular structure with the joinable end plates 124, a substantially sealed enclosure 118 is formed around the batteries 102. The enclosure 118 seals heat within the enclosure, aiding in maintaining the batteries at an elevated temperature.

Still referring to FIGURES 2 and 3, the modular battery container 100 may include an electrical bus 130. The electrical bus 130 electrically connects each of the batteries 102 contained in the modular battery container 100 to one another, thereby allowing the transfer of current from the batteries 102 into the vehicle's electrical system. The electrical bus 130 may be subdivided into a positive bus 130A and a negative bus 130B. To balance the "connecting resistance" of each of the batteries 102 connected to the bus 130 relative to one another (i.e. such that each battery sees the same connecting resistance), one of the buses 130A or 130B is preferably divided into two conductors coupled to one another by a bridge. Moreover, the dual conductor design may be used to manage the resistance caused by the bus 130 upon each battery, such that bus resistance is substantially the same for each battery 102 since the split bus design results in a similar bus conductor length for each battery. For instance, for the left most battery in FIGURE 2, the positive bus conductor length is short, and the negative bus conductor length is very long, resulting in a medium overall bus conductor length and thus an average "connecting resistance" for the left most battery 102. For the right most battery, the positive bus conductor length is medium, and the negative bus conductor length is medium, again resulting in a medium overall bus conductor length and an average "connecting resistance" that is substantially the same as the left most battery. Thus during charging and discharging of the batteries, each battery is equally charged or discharged since each has a substantially similar "connecting resistance" since the conductor length/connecting resistance is balanced between each of the batteries by the split bus design.

As stated above, the heating system 104 may be used for heating the batteries 102 to aid in maintaining the batteries 102 above or near an optimum working temperature, for instance above 29°C. The heating system 104 may utilize a thermostat 140 for monitoring battery temperature. The thermostat 140 may measure the battery temperature at a battery terminal 142. The illustrated thermostat 140 may be operational only when the engine is running to conserve battery capacity when the engine is turned off. The thermostat 140 is adapted to close a contact, thereby turning on a plurality of heaters 144, once the temperature drops below a nominal temperature, one suitable temperature being about 29°C. A thermal switch may be used to turn off the heaters 144 when the temperature reaches a predetermined maximum temperature, one suitable example being 60°C.

The heaters 144 may be of any suitable heater design known in the art. The heaters may be designed to individually heat each battery 102, such as shown in the illustrated embodiment, which utilizes carbon based self regulating heaters 144, or may use a single heater sized for the entire modular battery container 100. For instance, in one working embodiment of a single heater design, an elongate sheet heater is wound among the batteries 102 in a serpentine pattern. The illustrated embodiment uses individual heaters 144, which typically pull 2 to 3 amps when run individually, with the total load for the illustrated modular battery container 100 being in the range of 4 to 7 amps to power the four individual heaters 144 simultaneously. The heaters 144 of the illustrated embodiment use wrap around sheet type heater elements which wrap fully or partially around each of the batteries. Although specific heaters and amperage loads are described herein, those skilled in the art will appreciate that heater size and type is dependent on the amount of insulation, the operational ambient temperature specification, and other factors as known in the art.

The modular battery container 100 may further include a venting system having a plurality of vents 146 for venting the batteries 102. The vents 146 provide a means for ventilating the batteries 102 to permit any hydrogen or other gases released from the batteries 102 to be vented to atmosphere to reduce any chance of explosion due to electrical sparking or arcing in the modular battery container 100. The vents 146 may pass through holes disposed in the back side panel 112.

The batteries 102 may be secured to a base plate 154 by a clamping system 156. The base plate 154 is formed from any suitable rigid or semi-rigid material, such as wood. The batteries 102 are each clamped to the base plate 154 by the clamping system 156 via a series of elongate tie-down rods 158 anchored in the base plate 154. The tie-down rods 158 are threaded to permit the selective adjustment of their length such that the batteries 102, and the modular battery container 100 associated with the batteries 102, can be securely clamped to the base plate 154. The base plate 154 is in turn coupled to the vehicle.

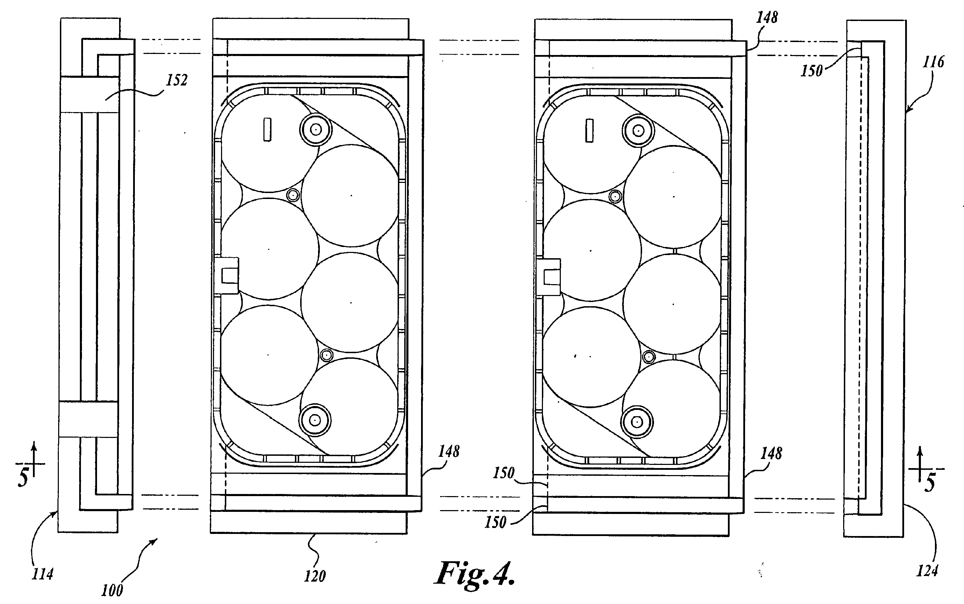

In light of the above description of an assembled modular battery container 100, the method of assembly and the structural elements permitting the efficient assembly of the modular battery container 100 will now be described. Referring now to FIGURES 4-6, the modular battery container 100 of FIGURES 1-3 has been modified through removal of two U-shaped joinable section pieces 120 such that the modular battery container 100 is now adapted to house two batteries 102 instead of the previous four batteries.

The means for coupling the components of the modular battery container 100 to one another will now be discussed. Preferably, the U-shaped joinable section pieces 120, joinable section plates 122, and joinable end plates 124 are coupled to one another via a quick connect system, such as an interference fit or a tongue and groove arrangement as shown in the illustrated embodiment. The illustrated tongue and groove arrangement utilizes a series of attachment structures in the form of elongate tongues 148 disposed along selected edges of each of the U-shaped joinable section pieces 120, joinable section plates 122, and joinable end plates 124, which fit a series of corresponding attachment structures in the form of elongate grooves 150 disposed along selected edges of each of the U-shaped joinable section pieces 120, joinable section plates 122, and joinable end plates 124. The tongues 148 and grooves 150 are sized and shaped to interface with one another in an interference fit relationship, thereby impeding their disassembly once assembled.

With regard to the right side panel 116, a groove 150 is disposed in the forward facing surface of the right side panel 116 for receiving the correspondingly shaped tongues 148 disposed along the forward facing edges of the U-shaped joinable section pieces 120 and joinable section plates 122. The right side panel 116 is similarly shaped to the left side panel 114 with the exception that the tongues 148 have been replaced with grooves 150. Also, the left side panel 114 includes passages 152 for permitting the electrical bus 130 to pass there through.

The U-shaped joinable section pieces 120 include a tongue 148 disposed along their right facing edges and a groove 150 disposed along their left facing edges. A tongue 148 is disposed along their upper edges for coupling to the joinable section plates 122.

The joinable section plates 122 include a tongue 148 located along their left facing edge, a groove 150 located along their right facing edge, and a pair of grooves 150 disposed on the bottom surface of the joinable section plates 122 positioned to receive the tongues 148 of the U-shaped joinable section pieces 120.

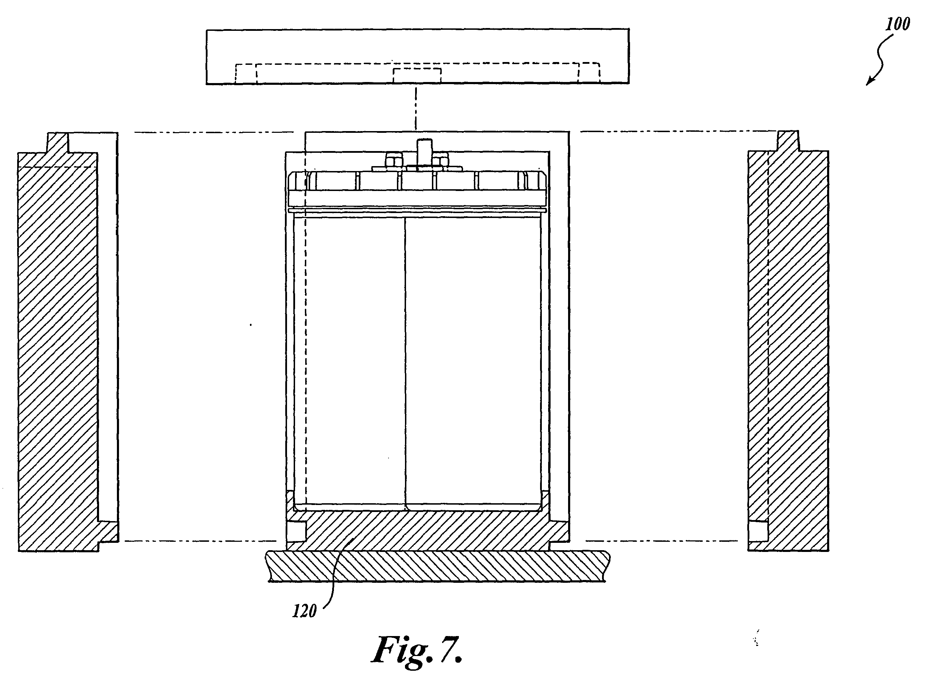

Referring now to FIGURE 7, the modular battery container 100 is shown in a single battery configuration. In the single battery configuration of FIGURE 7, only one U-shaped joinable section piece 120 is used. Inasmuch as the remaining components and method of assembly remain identical to that described above, for the sake of brevity, the modular battery container 100 of FIGURE 7 will not be redundantly described herein.

As should be apparent to those skilled in the art, the modular design of the illustrated embodiment of the modular battery container 100 permits the battery assembly of a vehicle to be developed as a module before installing it in the vehicle. Further, an installer of the vehicle does not have to keep on hand, manufacture, and design numerous sizes of modular battery containers, since the modular design of the illustrated embodiment of the modular battery container 100 permits the efficient and cost effective assembly of any size modular battery container from a few stock parts.

Although the U-shaped joinable section pieces are illustrated and described as a single, integrally formed part, it should be apparent to those skilled in the art that the U-shaped joinable section pieces may alternately be formed from separate parts. For instance, the U-shaped joinable section pieces may be formed by coupling a pair of side members to a bottom member in a similar manner as described for coupling the other parts to one another.

Further, although the top panel was illustrated and described as being formed from a number of joinable section plates, it should be apparent to those skilled in the art that alternately, the top panel may be formed in one elongate integrally formed piece. This would then require the stocking of several lengths of top panels to accommodate battery containers of various lengths, however this apparent disadvantage may not be of concern for some users. Further still, although the illustrated embodiment is illustrated and described as being expandable in length only, it should be apparent to those skilled in the art that modular battery containers expandable in length, width and/or height are also within the spirit and scope of the present invention.

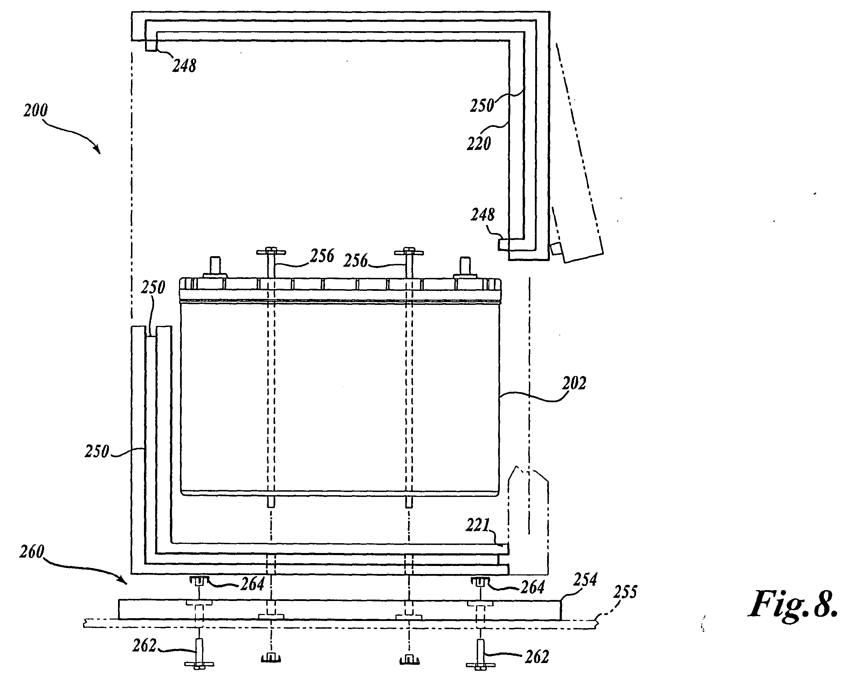

Referring now to FIGURE 8, an alternate embodiment of a modular battery container 200 formed in accordance with the present invention is shown. The modular battery container 200 is substantially similar in structure and operation to the above described embodiment. Therefore, for the sake of brevity, this detailed description will focus only upon where the alternate embodiment departs from the above described embodiment.

Generally stated, the modular battery container 200 of FIGURE 8 is substantially similar to the modular battery container of FIGURES 1-7 with the exception that the modular battery container 200 of FIGURE 8 utilizes L-shaped joinable section pieces 220 and 221 in lieu of the U-shaped joinable section pieces utilized in the embodiment of FIGURES 1-7. The use of the L-shaped joinable section pieces 220 and 221 allows, among other things, for the top L-shaped joinable section piece 220 to be removed to permit the batteries 202 to be easily lifted or slid out of the vehicle for replacement, repair, etc.

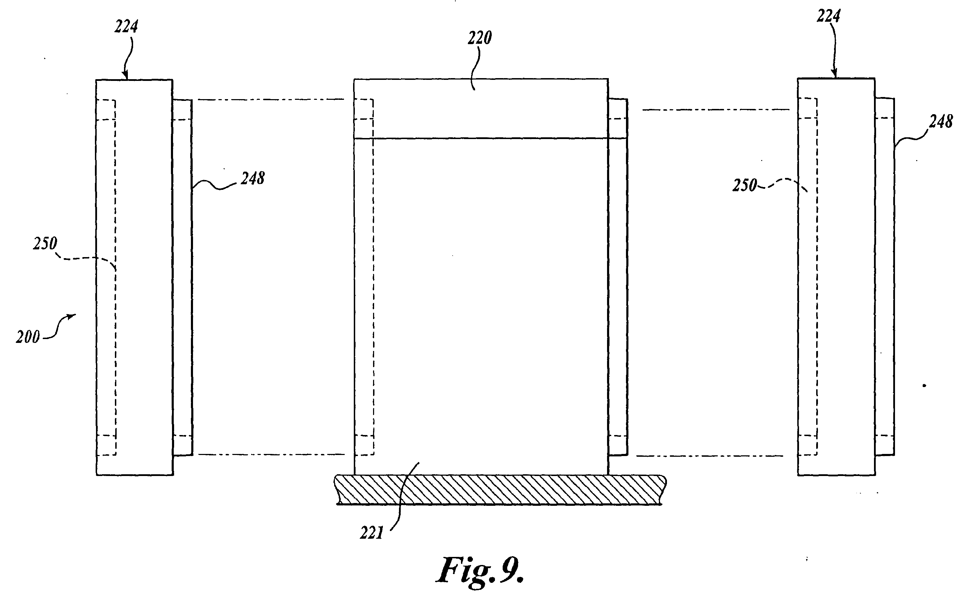

Focusing now in greater detail upon the structure of the modular battery container 200, the modular battery container 200 includes the L-shaped joinable section pieces 220 and 221 mentioned above, in addition to two joinable end plates 224 (shown in FIGURE 9 but removed from FIGURE 8 for purposes of clarity), a base plate 254, a clamping system 256, and a hold down system 260.

The L-shaped joinable section pieces 220 and 221 include a top L-shaped joinable section piece 220 which is joinable to a bottom L-shaped joinable section piece 221 to form a rectangular shaped tubular structure. Additional L-shaped joinable section pieces may be joined by any suitable means to the first pair of L-shaped joinable section pieces 220 and 221 to increase the length of the modular battery container 200 to accommodate any number of batteries 202, as described above for the embodiment of FIGURES 1-7. Alternately, L-shaped joinable section pieces 220 and 221 of the desired length may be used to eliminate the step of joining multiple L-shaped joinable section pieces 220 and 221 to acquire the desired length.

The means for coupling the components of the modular battery container 200 to one another will now be discussed. Preferably, the L-shaped joinable section pieces 220 and 221 and joinable left and right end plates are coupled to one another via a quick connect system, such as an interference fit or a tongue and groove arrangement as shown in the above illustrated embodiment. The illustrated tongue and groove arrangement utilizes a series of elongate tongues 248 disposed along selected edges of each of the L-shaped joinable section pieces 220 and 221 and joinable left and right end plates, which fit a series of corresponding elongate grooves 250 disposed along selected edges of each of the L-shaped joinable section pieces 220 and 221 and joinable left and right end plates. The tongues 248 and grooves 250 are sized and shaped to interface with one another in an interference fit relationship, thereby impeding their disassembly once assembled.

The L-shaped joinable section pieces 220 and 221 may be deformable to assist in their coupling to another section. For instance, as best seen in FIGURE 8, the L-shaped joinable section pieces 220 and 221 may be deformed from the normal default position shown in solid lines for the upper L-shaped joinable section piece 220 to a deformed position as indicated in phantom. In the deformed position, the legs of the L-shaped joinable section piece 220 are deformed or deflected outward from one another from their normal perpendicular orientation a predetermined angular displacement, a few suitable examples being displacements greater than about 1, 2, 4, 6, 8, or 10 degrees, such that the angle between the legs exceeds 90 degrees. This results in a tongue 248 disposed on one of the legs being displaced outward a distance about equal to the height of the tongue 248 so that the tongue 248 can pass over an edge of the lower L-shaped joinable section piece 221. Of note, the amount of deformation or deflection may vary from the amounts described herein, and is not restricted to angular displacement (i.e. the legs may be linearly displaced).

Once the tongue 248 is aligned with the groove 250 on the lower L-shaped joinable section piece 221, the force used to deform the upper L-shaped joinable section piece 220 can be released. Preferably, the upper L-shaped joinable section piece 220 is made from an elastic, deformable material, such that the leg is naturally biased to return the L-shaped joinable section piece 220 back into the default position, removably locking the tongue 248 of the upper L-shaped joinable section piece 220 into the groove 250 of the lower L-shaped joinable section piece 221 as shown in phantom in FIGURE 8. As should be apparent to those skilled in the art, although not shown for the embodiment of FIGURES 1-7, the locking together of portions of the battery container 200 to one another by using the elastic deformability of the sections to bias attachment structures into engagement with one another as shown for the exemplary embodiment illustrated and described in FIGURES 8 and 9 is also suitable for use with the embodiment of FIGURES 1-7 and other embodiments formed in accordance with the present invention.

Referring to FIGURE 9, the end plates 224 may be substantially identical in shape such that the left and right end plates 224 are interchangeable. Thus, a manufacturer need only make one design of an end plate 224, and part suppliers need only stock one style of end plate 224, the end plate 224 useable on either the left or right side of the battery container 200. Moreover, the end plates 224 include an elongate tongue 248 disposed on a first side of the end plate 224 and elongate grooves 250 disposed on a second, opposite side of the end plate 224. Depending on which end of the battery container 200 the end plate 224 is to be installed, either the elongate tongues 248 or the elongate grooves 250 of the first or second side are selectively aligned and coupled to the L-shaped joinable section pieces 220 and 221, with the elongate tongues 248 or grooves 250 associated with the other side of the end plate 224 facing away from the battery container 200 remaining unused. Those skilled in the art will appreciate that the interchangeable design of the end plates 224 applies equally well to the sections of the battery container of the above described embodiments.

Referring to FIGURE 8, this detailed description will now focus on the base plate 254, the clamping system 256, and the hold down system 260. The base plate 254 and the clamping system 256 are as described for the above embodiments and will not be redundantly described herein. The hold down system 260 is used in retaining the base plate 254 to the vehicle 255. The hold down system 260 may include a plurality of elongate tie-down rods 262 that may be selectively coupled to a plurality of anchors 264 disposed in the base plate 254. The tie-down rods 262 are threaded to permit the selective adjustment of their length such that the base plate 254, and the batteries 102 and the modular battery container 100 coupled to the base plate 254, can be securely clamped to the vehicle 255. As should be apparent to those skilled in the art, although not shown for the embodiment of FIGURES 1-7, the hold down system 260 of the embodiment illustrated and described in FIGURES 8 and 9 is also suitable for use with the embodiment of FIGURES 1-7.

Although a specific quick to connect connecting means is illustrated and described for the above described embodiments, it should be apparent to those skilled in the art that other quick and non-quick to connect fitting methods are suitable for use with and within the spirit and scope of the present invention. For instance, the panels and/or joinable sections may be coupled to one another, in either a permanent or removable manner, using various attachment structures, such as fasteners, latches, adhesives, formed integrally with another panel or section, etc.

While the preferred embodiment of the invention has been illustrated and described, it will be appreciated that various changes can be made therein without departing from the spirit and scope of the invention.

## Claims

1. A selectively expandable vehicle battery container comprising:
a first modular body section at least partially defining a cavity for storing at least a portion of a battery, the cavity having a first open end and a second open end, wherein at least the first open end includes an attachment structure adapted to couple to a second modular body section shaped substantially identical to the first modular body section such that the cavity can be selectively expanded in volume by coupling the second modular body section to the first modular body section.

2. The selectively expandable vehicle battery container of Claim 1, wherein the attachment structure includes a groove.

3. The selectively expandable vehicle battery container of Claim 2, wherein the second open end includes an attachment structure that includes a tongue.

4. The selectively expandable vehicle battery container of Claim 1, wherein the attachment structure is an interference fit fastener.

5. The selectively expandable vehicle battery container of Claim 1, wherein the first modular body section is tubular in shape and includes a top wall, a bottom wall, a first side wall, and a second side wall, wherein at least one of the top, bottom, first side, or second side walls is selectively removable from the other walls.

6. The selectively expandable vehicle battery container of Claim 1, further including a heating system for heating the cavity.

7. The selectively expandable vehicle battery container of Claim 1, wherein the first modular body section includes a substantially U-shaped integrally formed portion having an open portion and a panel removably couplable to the U-shaped integrally formed portion to selectively close off the open portion.

8. The selectively expandable vehicle battery container of Claim 1, wherein the first modular body section comprises two L-shaped sections removably coupled to one another.

9. The selectively expandable vehicle battery container of Claim 1, wherein the first modular body section is formed from a first section having a first attachment structure and a second section having a second attachment structure, wherein the first section is selectively and elastically deformable between a deformed position in which the first attachment structure is spaced from the second attachment structure and a default position wherein the first attachment structure is biased into engagement with the second attachment structure to couple the first section to the second section.

10. The selectively expandable vehicle battery container of Claim 1, wherein the first modular body section includes an interlocking structure adapted to cooperatively interface with a cooperatively shaped interlocking structure of the battery to aid in securing the battery in a predetermined position in the selectively expandable vehicle battery container.

11. The selectively expandable vehicle battery container of Claim 1, further including a joinable section having a first attachment structure on a first side of the joinable section for attaching the first side of the joinable section to the first modular body section and a second attachment structure on a second side of the joinable section for attaching the second side of the joinable section to the first modular body section.

12. A modular vehicle battery container comprising:
(a) a first modular center section;
(b) a second modular center section coupled to the first modular center section, the second modular center section being substantially identical to the first modular center section;
(c) a first end section attached to the first modular center section; and
(d) a second end section attached to the second modular center section, wherein the first and second modular center sections and the first and second end sections cooperatively define a cavity for receiving one or more vehicle batteries.

13. The modular vehicle battery container of Claim 12, further including a third center section removably disposed between the first and second modular center sections.

14. The modular battery container of Claim 12, wherein the first modular center section includes two L-shaped sections removably coupled to one another to form the first modular center section.

15. The modular battery container of Claim 12, wherein the first modular center section includes a panel removably coupled to an integrally formed channel section so as to span between distal ends of a pair of legs of the channel section.

16. The modular battery container of Claim 12, wherein the first modular center section include attachment structures for being received by cooperatively shaped attachment structures disposed on either the end section or the second modular center section.

17. The modular battery container of Claim 12, wherein the first modular center section is formed from a first section having a first attachment structure and a second section having a second attachment structure, wherein the first section is selectively and elastically deformable between a deformed position in which the first attachment structure is spaced from the second attachment structure and a default position wherein the first attachment structure is biased into engagement with the second attachment structure to couple the first section to the second section.

18. The modular battery container of Claim 12, wherein the first modular center section includes an interlocking structure adapted to cooperatively interface with a cooperatively shaped interlocking structure of the battery to aid in securing the battery in a predetermined position in the modular battery container.

19. The modular battery container of Claim 12, wherein the first and second end sections each include a first attachment structure on a first side for attaching the first side to the first modular center section and a second attachment structure on a second side for attaching the second side to the second modular center section.

20. A method of forming a vehicle battery container for housing a selected number of vehicle batteries comprising:
(a) determining the selected number of vehicle batteries in which the vehicle battery container is to house;
(b) selecting a number of modular sections for forming an enclosure of sufficient size to house the selected number of vehicle batteries; and
(c) forming the enclosure by coupling the selected number of modular sections to one another.

21. The method of Claim 20, further including coupling an end section to at least one of the modular sections.

22. The method of Claim 20, further including coupling a top panel to a channel section to form at least one of the modular sections.

23. The method of Claim 20, further including forming at least one of the modular sections by coupling a pair of L-shaped sections to one another.

24. The method of Claim 20, wherein the modular sections each include a quick connect fastening member adapted to couple to a cooperatively shaped quick connect fastening member disposed on another one of the modular sections.

25. The method of Claim 20, further comprising deforming at least one of the modular sections from a default shape to a deformed shape by applying a deforming force to the modular section to space an attachment structure coupled to the vehicle battery container from a cooperatively shaped attachment structure coupled to the vehicle battery container and removing the deforming force to permit the modular section to return to the default shape to cause the attachment structure to be biased into engagement with the cooperatively shaped attachment structure.
